# EUROPÄISCHE PATENTANMELDUNG

(11) **EP 3 360 674 A1**
(43) Veröffentlichungstag der Anmeldung: **15.08.2018**
(21) Anmeldenummer: 17020051.3
(22) Anmeldetag: 10.02.2017
(51) Int. Cl.: B30B 1/26, B30B 15/00, F16N 7/00, F16C 33/74, B21D 13/02, B21D 13/06, F16H 21/44, B30B 15/06

(54) **ANTRIEBSVORRICHTUNG**

(71) Anmelder: Linde Aktiengesellschaft, 80331 München (DE)
(72) Erfinder: Kanzler, Karlmann, 84504 Altötting (DE)
(74) Vertreter: Meilinger, Claudia Sabine

(57) **Zusammenfassung**

Eine Antriebsvorrichtung (30) für ein Umformwerkzeug (14), mit einem Werkzeugträger (31), einem Lagerblock (36, 37), einem Exzenterkörper (45, 46), der mit Hilfe einer Exzenterkörperlagerung (47) in dem Lagerblock (36, 37) drehbar gelagert ist, einer Exzenterachse (33, 34), die drehfest an oder in dem Werkzeugträger (31) gelagert ist und die mit Hilfe einer Exzenterachsenlagerung (48) drehbar in dem Exzenterkörper (45, 46) gelagert ist, wobei eine Rotationsachse (A1) des Exzenterkörpers (45, 46) und eine Rotationsachse (A2) der Exzenterachse (33, 34) parallel zueinander und beabstandet voneinander positioniert sind.

## Beschreibung

Die Erfindung betrifft eine Antriebsvorrichtung für ein Umformwerkzeug, insbesondere für ein Umformwerkzeug zum Herstellen eines Packungsblechs für eine strukturierte Packung einer Stoffaustauschkolonne.

Mit Hilfe von Stoffaustauschkolonnen, wie Rektifikations- oder Luftzerlegungssäulen, ist es möglich, verflüssigte Luft in ihre Bestandteile zu zerlegen. Eine derartige Stoffaustauschkolonne weist einen zylinderförmigen Behälter auf, in dem sogenannte Packungen angeordnet sind. Hierbei wird zwischen ungeordneten und geordneten Packungen unterschieden. Ungeordnete Packungen sind Schüttungen aus definiert geformten Körpern, wie Ringen, Zylindern, Sattelkörpern oder dergleichen. Im Gegensatz hierzu werden bei geordneten Packungen Metallgewebe oder-bleche so gefaltet und/oder gewickelt, dass es zu einer intensiven Lenkung des Dampfes und der Flüssigkeit und damit verbundenem intensiven Kontakt beider kommt. Bei geordneten Packungen werden mehrere Packungsscheiben aufeinandergestapelt. Die Packungsscheiben sind jeweils wiederum aus einer Vielzahl an aufeinandergestapelten gewellten Packungsblechen aufgebaut.

Derartige Packungsbleche können dadurch hergestellt werden, dass ein unverformtes Endlosband mit Hilfe eines Umformwerkzeugs umgeformt wird. Das Umformwerkzeug weist bevorzugt eine erste Werkzeughälfte und eine zweite Werkzeughälfte auf, die beispielsweise mit Hilfe einer sogenannten Exzenterpresse bewegt werden. Oftmals haben derartige Exzenterpressen ihre Lagerungen direkt über dem Umformwerkzeug und somit über dem herzustellenden Packungsblech. Bei Leckagen kann Schmiermedium, beispielsweise Öl, auf das Packungsblech gelangen. Eine derartige Verunreinigung ist insbesondere bei der Herstellung von Packungsblechen, die in Stoffaustauschkolonnen zur Herstellung von Sauerstoff verwendet werden, nicht zulässig.

Die EP 0 739 846 A1 beschreibt eine Vorrichtung zum Herstellen eines schrägplissierten Metallstreifens. Die Vorrichtung umfasst ein Paar an parallel angeordneten, ineinander greifenden Zahnwalzen.

Die EP 1 044 787 B1 zeigt ein Verfahren zum Formgeben von streifenförmigen Folien. Bei dem Verfahren werden ineinander greifende Zahnwalzen verwendet.

Die CN 203678982 U beschreibt eine Vorrichtung zum Herstellen eines gewellten Metallstreifens. Die Vorrichtung umfasst zwei Werkzeughälften, wobei eine obere Werkzeughälfte zum Umformen des Metallstreifens senkrecht auf diesen zu gefahren wird.

Die Aufgabe der vorliegenden Erfindung besteht darin, eine verbesserte Antriebsvorrichtung für ein Umformwerkzeug zur Verfügung zu stellen.

Demgemäß wird eine Antriebsvorrichtung für ein Umformwerkzeug vorgeschlagen. Die Antriebsvorrichtung umfasst einen Werkzeugträger, einen Lagerblock, einen Exzenterkörper, der mit Hilfe einer Exzenterkörperlagerung in dem Lagerblock drehbar gelagert ist, eine Exzenterachse, die drehfest an oder in dem Werkzeugträger gelagert ist und die mit Hilfe einer Exzenterachsenlagerung drehbar in dem Exzenterkörper gelagert ist, wobei eine Rotationsachse des Exzenterkörpers und eine Rotationsachse der Exzenterachse parallel zueinander und beabstandet voneinander positioniert sind.

Dadurch, dass der Exzenterkörper in dem Lagerblock gelagert ist und die Exzenterachse in dem Exzenterkörper gelagert ist, ergibt sich ein besonders kompakter Aufbau. Zu schmierende Bauteile, wie die Exzenterkörperlagerung und die Exzenterachsenlagerung, können dadurch vollständig in dem Lagerblock untergebracht werden, wodurch die Gefahr eines Austretens eines Schmiermediums aus dem Lagerblock signifikant reduziert wird. Vorzugsweise ist die Exzenterkörperlagerung innerhalb des Lagerblocks und die Exzenterachsenlagerung ist innerhalb des Exzenterkörpers angeordnet. Bevorzugt ist die Exzenterachsenlagerung innerhalb der Exzenterkörperlagerung angeordnet.

Gemäß einer Ausführungsform umfasst die Antriebsvorrichtung ferner eine Schmiereinrichtung zum Schmieren der Exzenterkörperlagerung und der Exzenterachsenlagerung mit einem Schmiermedium, und eine Sperrmediumeinrichtung, die dazu eingerichtet ist, eine zwischen der Exzenterkörperlagerung und dem Werkzeugträger vorgesehene erste Sperrmediumkammer und eine zwischen der Exzenterachsenlagerung und dem Werkzeugträger vorgesehene zweite Sperrmediumkammer mit einem Sperrmedium zu beaufschlagen, um einen Austritt des Schmiermediums in Richtung des Werkzeugträgers zu unterbinden.

Die Antriebsvorrichtung umfasst in einer bevorzugten Ausführungsform einen Werkzeugträger, einen Lagerblock, einen Exzenterkörper, der mit Hilfe einer Exzenterkörperlagerung in oder an dem Lagerblock drehbar gelagert ist, eine Exzenterachse, die drehfest an oder in dem Werkzeugträger gelagert ist, und die mit Hilfe einer Exzenterachsenlagerung drehbar in oder an dem Exzenterkörper gelagert ist, wobei eine Rotationsachse des Exzenterkörpers und eine Rotationsachse der Exzenterachse parallel zueinander und beabstandet voneinander positioniert sind, eine Schmiereinrichtung zum Schmieren der Exzenterkörperlagerung und der Exzenterachsenlagerung mit einem Schmiermedium, und eine Sperrmediumeinrichtung, die dazu eingerichtet ist, eine zwischen der Exzenterkörperlagerung und dem Werkzeugträger vorgesehene erste Sperrmediumkammer und eine zwischen der Exzenterachsenlagerung und dem Werkzeugträger vorgesehene zweite Sperrmediumkammer mit einem Sperrmedium zu beaufschlagen, um einen Austritt des Schmiermediums in Richtung des Werkzeugträgers zu unterbinden.

Dadurch, dass die Sperrmediumkammer mit dem Sperrmedium beaufschlagt wird, wird zuverlässig verhindert, dass das Schmiermedium in Richtung des Werkzeugträgers austreten kann. Hierdurch kann kein Schmiermedium in einen Bereich über dem Umformwerkzeug austreten. Hierdurch wird eine Verunreinigung des herzustellenden Produkts, beispielsweise eines Packungsblechs, zuverlässig verhindert.

Vorzugsweise ist die Sperrmediumeinrichtung dazu eingerichtet, das Sperrmedium mit einem Druck zu beaufschlagen, der höher ist als ein Druck des Schmiermediums. Das Sperrmedium kann beispielsweise Wasser sein. Das Schmiermedium kann beispielsweise Öl sein. Vorzugsweise mischen sich das Schmiermedium und das Sperrmedium nicht. Hierdurch ist eine einfache Trennung des Sperrmediums von dem Schmiermedium möglich, wodurch sowohl das Sperrmedium als auch das Schmiermedium wiederverwendet werden können. Vorzugsweise dreht sich die Exzenterachse nicht um die Rotationsachse, sondern steht fest zu dieser. Insbesondere dreht sich der Exzenterkörper mit Hilfe der Exzenterachsenlagerung um die Rotationsachse der Exzenterachse. An dem Werkzeugträger ist vorzugsweise eine Bohrung vorgesehen, durch die die Exzenterachse hindurchgeführt ist. Beispielsweise ist die Exzenterachse in die Bohrung eingepresst oder auf sonstige Art und Weise, beispielsweise mit Hilfe einer Passfeder, drehfest mit dem Werkzeugträger verbunden. Das Umformwerkzeug weist vorzugsweise eine erste Werkzeughälfte und eine zweite Werkzeughälfte auf. Vorzugsweise sind dem Umformwerkzeug zwei derartige Antriebsvorrichtungen zugeordnet, wobei jede Antriebsvorrichtung zum Antreiben einer Werkzeughälfte geeignet ist. An dem Werkzeugträger kann jeweils eine Werkzeughälfte befestigt werden. Hierzu kann an dem Werkzeugträger ein Befestigungsabschnitt vorgesehen sein, mit dessen Hilfe die jeweilige Werkzeughälfte schnell mit dem entsprechenden Werkzeugträger verbindbar und wieder von diesem lösbar ist. Vorzugsweise sind zwei zu einer Packungsblechebene symmetrisch angeordnete, synchron gegenläufige Antriebsvorrichtungen vorgesehen.

Gemäß einer weiteren Ausführungsform ist zwischen der Exzenterkörperlagerung und der ersten Sperrmediumkammer eine erste Leckagemediumkammer zum Sammeln des Schmiermediums und des Sperrmediums angeordnet, wobei zwischen der Exzenterachsenlagerung und der zweiten Sperrmediumkammer eine zweite Leckagemediumkammer zum Sammeln des Schmiermediums und des Sperrmediums angeordnet ist.

Das heißt, die Leckagemediumkammern sind dazu eingerichtet, ein Gemisch aus dem Schmiermedium und dem Sperrmedium aufzunehmen. Dieses Gemisch kann mit Hilfe von Kanälen und Leitungen einem Sammelbehälter zugeführt werden. Von dem Sammelbehälter kann das Gemisch abgeführt und wieder aufbereitet, das heißt, getrennt werden. Hierdurch können das Schmiermedium und das Sperrmedium mehrfach verwendet werden. Vorzugsweise umläuft die erste Sperrmediumkammer den Exzenterkörper ringförmig vollständig. Auch die zweite Sperrmediumkammer ist ringförmig ausgebildet und läuft bevorzugt vollständig um die Exzenterachse um.

Gemäß einer weiteren Ausführungsform ist die Sperrmediumeinrichtung dazu eingerichtet, das Sperrmedium in der ersten Sperrmediumkammer und das Sperrmedium in der zweiten Sperrmediumkammer jeweils mit einem Druck zu beaufschlagen, der höher ist als ein entsprechender Druck des Schmiermediums und des Sperrmediums in der ersten Leckagemediumkammer und der zweiten Leckagemediumkammer.

Hierdurch wird zuverlässig ein Durchtritt des Schmiermediums in die erste Sperrmediumkammer und in die zweite Sperrmediumkammer verhindert. Vorzugsweise ist die erste Sperrmediumkammer mit Hilfe von Kanälen mit der zweiten Sperrmediumkammer in Fluidverbindung. Auch die erste Leckagemediumkammer ist mit Hilfe von Kanälen mit der zweiten Leckagemediumkammer in Fluidverbindung. Die Sperrmediumeinrichtung kann zum Druckbeaufschlagen des Sperrmediums beispielsweise eine Pumpe aufweisen. Alternativ kann auch der geodätische Druck des Sperrmediums ausgenutzt werden. Hierdurch ist eine Pumpe verzichtbar.

Gemäß einer weiteren Ausführungsform ist zwischen der ersten Sperrmediumkammer und der ersten Leckagemediumkammer eine erste Dichteinrichtung, insbesondere ein Wellendichtring, angeordnet, wobei zwischen der zweiten Sperrmediumkammer und der zweiten Leckagemediumkammer eine zweite Dichteinrichtung, insbesondere ein Wellendichtring, angeordnet ist.

Die erste Dichteinrichtung und/oder die zweite Dichteinrichtung können beispielsweise auch als O-Ringe ausgebildet sein. Jede Dichteinrichtung kann mehrere Wellendichtringe umfassen.

Gemäß einer weiteren Ausführungsform ist zwischen der Exzenterkörperlagerung und der ersten Leckagemediumkammer eine Dichteinrichtung, insbesondere ein Wellendichtring, angeordnet.

Vorzugsweise umfasst die Dichteinrichtung mehrere Wellendichtringe. Vorzugsweise ist die Exzenterkörperlagerung nicht gegenüber der Exzenterachsenlagerung abgedichtet, so dass diese durch einen gemeinsamen Schmierkreislauf schmierbar sind.

Gemäß einer weiteren Ausführungsform ist zwischen der Exzenterachsenlagerung und der zweiten Leckagemediumkammer eine Dichteinrichtung, insbesondere ein Wellendichtring, angeordnet.

Die Dichteinrichtung kann mehrere Wellendichtringe und/oder O-Ringe umfassen. Der Schmierkreislauf ist in Richtung des Werkzeugträgers mit Hilfe der Dichteinrichtung der Exzenterkörperlagerung und der Dichteinrichtung der Exzenterachsenlagerung und in Richtung einer Antriebsachse des Exzenterkörpers durch eine weitere Dichteinrichtung, die ebenfalls mehrere Wellendichtringe umfassen kann, abgedichtet.

Gemäß einer weiteren Ausführungsform umfasst die Antriebsvorrichtung ferner einen ersten Lagerblock und einen zweiten Lagerblock, wobei der Werkzeugträger zwischen dem ersten Lagerblock und dem zweiten Lagerblock angeordnet ist, wobei jedem Lagerblock ein erster Exzenterkörper und ein zweiter Exzenterkörper zugeordnet sind, die jeweils mit Hilfe einer Exzenterkörperlagerung in dem entsprechenden Lagerblock drehbar gelagert sind.

Das heißt, dem Werkzeugträger sind vier Exzenterkörper zugeordnet, die jeweils paarweise neben diesem positioniert sind. Vorzugsweise sind die Exzenterkörper innerhalb des jeweiligen Lagerblocks angeordnet. Alternativ können die Exzenterkörper auch außerhalb des entsprechenden Lagerblocks positioniert sein. Jeder Exzenterkörper weist bevorzugt eine Antriebsachse auf, mit deren Hilfe der Exzenterkörper mit einer Antriebseinrichtung antreibbar ist. Jedem Exzenterkörper kann eine derartige Antriebseinrichtung zugeordnet sein. Alternativ können auch alle Exzenterkörper oder jeweils zwei Exzenterkörper eine gemeinsame Antriebseinrichtung aufweisen. Die Antriebseinrichtungen sind vorzugsweise synchronisiert. Die Synchronisierung kann elektronisch oder mechanisch, beispielsweise mit Hilfe eines Riemenantriebs oder eines Getriebes, erfolgen. Der erste Lagerblock und der zweite Lagerblock können jeweils mehrteilig ausgebildet sein und beispielsweise jeweils zwei Lagerblockabschnitte aufweisen, die fest miteinander verbunden sind. Alternativ können die Lagerblöcke auch einteilig ausgebildet sein.

Gemäß einer weiteren Ausführungsform umfasst die Antriebsvorrichtung ferner eine erste Exzenterachse, die drehfest an oder in dem Werkzeugträger gelagert ist und die mit Hilfe einer Exzenterachsenlagerung drehbar in dem ersten Exzenterkörper gelagert ist, und eine zweite Exzenterachse, die drehfest an oder in dem Werkzeugträger gelagert ist und die mit Hilfe einer Exzenterachsenlagerung drehbar in dem zweiten Exzenterkörper gelagert ist.

Vorzugsweise ragen die erste Exzenterachse und die zweite Exzenterachse jeweils beidseitig aus dem Werkzeugträger hinaus. Vorzugsweise sind hierzu in dem Werkzeugträger zwei Bohrungen vorgesehen, in denen die Exzenterachsen aufgenommen sind. Die Exzenterachsen sind beabstandet voneinander angeordnet und mit dem Werkzeugträger fest verbunden. Jeder Exzenterachse sind zwei Exzenterkörper zugeordnet, die beidseits des Werkzeugträgers positioniert sind.

Gemäß einer weiteren Ausführungsform sind der erste Lagerblock und der zweite Lagerblock mit Hilfe einer Verbindungsplatte miteinander verbunden.

Mit Hilfe der Verbindungsplatte sind der erste Lagerblock und der zweite Lagerblock voneinander beabstandet positioniert angeordnet. Mit Hilfe der Verbindungsplatte kann die Antriebsvorrichtung versteift werden.

Gemäß einer weiteren Ausführungsform bewegt sich die Rotationsachse der Exzenterachse im Betrieb der Antriebsvorrichtung kreisförmig mit einem Exzenterradius um die Rotationsachse des Exzenterkörpers.

Hierdurch kann eine exzentrische Bewegung des Werkzeugträgers verwirklicht werden. Hierdurch kann eine Bewegung der Werkzeughälften sowohl senkrecht und gegensinnig zu der Maschinenrichtung als auch parallel und gleichsinnig zu dieser verwirklicht werden.

Gemäß einer weiteren Ausführungsform ist der Exzenterkörper mit Hilfe einer Antriebseinrichtung antreibbar.

Hierzu weist jeder Exzenterkörper eine Antriebsachse auf, an der die Antriebseinrichtung angeschlossen ist. Die Antriebseinrichtung kann beispielsweise ein Elektromotor, ein Hydraulikmotor oder ein Pneumatikmotor sein. Jedem Exzenterkörper kann eine Antriebseinrichtung zugeordnet sein. Alternativ können auch mehrere Exzenterkörper eine gemeinsame Antriebseinrichtung umfassen.

Gemäß einer weiteren Ausführungsform weist der Lagerblock einen abnehmbaren Lagerblockdeckel auf, der dem Werkzeugträger abgewandt an dem Lagerblock befestigt ist.

Dadurch, dass der Lagerblockdeckel dem Werkzeugträger abgewandt an dem Lagerblock montiert ist, kann bei einem Öffnen des Lagerblockdeckels verhindert werden, dass das Schmiermedium mit dem Werkzeugträger und damit mit dem Umformwerkzeug in Kontakt gerät. Die Antriebsachsen der Exzenterkörper sind vorzugsweise mit Hilfe von Dichteinrichtungen, insbesondere mit Hilfe von Wellendichtringen, gegenüber dem Lagerblockdeckel abgedichtet.

Gemäß einer weiteren Ausführungsform sind bei abgenommenem Lagerblockdeckel der Exzenterkörper, die Exzenterkörperlagerung und/oder die Exzenterachsenlagerung in einer Demontagerichtung, die von dem Werkzeugträger weg orientiert ist, aus dem Lagerblock entnehmbar.

Hierdurch kann auch bei einer Demontage der Antriebsvorrichtung zuverlässig verhindert werden, dass der Werkzeugträger mit dem Schmiermedium verunreinigt wird. Hierdurch kann auf eine aufwendige Reinigung verzichtet werden. Umgekehrt sind der Exzenterkörper, die Exzenterkörperlagerung und/oder die Exzenterachsenlagerung in einer Montagerichtung, die hin zu dem Werkzeugträger orientiert ist, in den Lagerblock einbaubar. Vorteilhafterweise kann die komplette Lager- und Dichteinheit von einer Außenseite der Antriebsvorrichtung ohne große Demontagen an der Antriebsvorrichtung beim Austausch von Verschleißteilen, wie Dichteinrichtungen oder Lagerungen, leicht herausgezogen und gewartet werden.

Gemäß einer weiteren Ausführungsform weist die Exzenterkörperlagerung und/oder die Exzenterachsenlagerung Gleitlager auf.

Die Exzenterkörperlagerung kann Gleitlager und/oder Wälzlager, beispielsweise Nadellager oder Tonnenlager aufweisen, und die Exzenterachsenlagerung weist vorzugsweise Gleitlager auf. Die Exzenterachsenlagerung kann auch Wälzlager umfassen.

Weitere mögliche Implementierungen der Antriebsvorrichtung umfassen auch nicht explizit genannte Kombinationen von zuvor oder im Folgenden bezüglich der Ausführungsbeispiele beschriebenen Merkmale und Ausführungsformen. Dabei wird der Fachmann auch Einzelaspekte als Verbesserungen oder Ergänzungen zur jeweiligen Grundform der Antriebsvorrichtung hinzufügen.

Weitere vorteilhafte Ausgestaltungen und Aspekte der Antriebsvorrichtung sind Gegenstand der Unteransprüche sowie der im Folgenden beschriebenen Ausführungsbeispiele der Antriebsvorrichtung. Im Weiteren wird die Antriebsvorrichtung anhand von bevorzugten Ausführungsformen unter Bezugnahme auf die beigefügten Figuren näher erläutert.
Fig. 1 zeigt eine schematische Schnittansicht einer Ausführungsform einer Stoffaustauschkolonne;
Fig. 2 zeigt eine schematische perspektivische Ansicht einer Ausführungsform eines Packungsblechs für eine Packung der Stoffaustauschkolonne gemäß Fig. 1;
Fig. 3 zeigt eine schematische perspektivische Ansicht einer Ausführungsform eines Umformwerkzeugs zum Herstellen eines Packungsblechs gemäß Fig. 2;
Fig. 4 zeigt eine schematische perspektivische Ansicht einer Ausführungsform einer Antriebsvorrichtung für das Umformwerkzeug gemäß Fig. 3;
Fig. 5 zeigt eine weitere schematische perspektivische Ansicht der Antriebsvorrichtung gemäß Fig. 4;
Fig. 6 zeigt eine schematische Schnittansicht der Antriebsvorrichtung gemäß Fig. 4; und
Fig. 7 zeigt die Detailansicht VII gemäß Fig. 6.

In den Figuren sind gleiche oder funktionsgleiche Elemente mit denselben Bezugszeichen versehen worden, sofern nichts anderes angegeben ist.

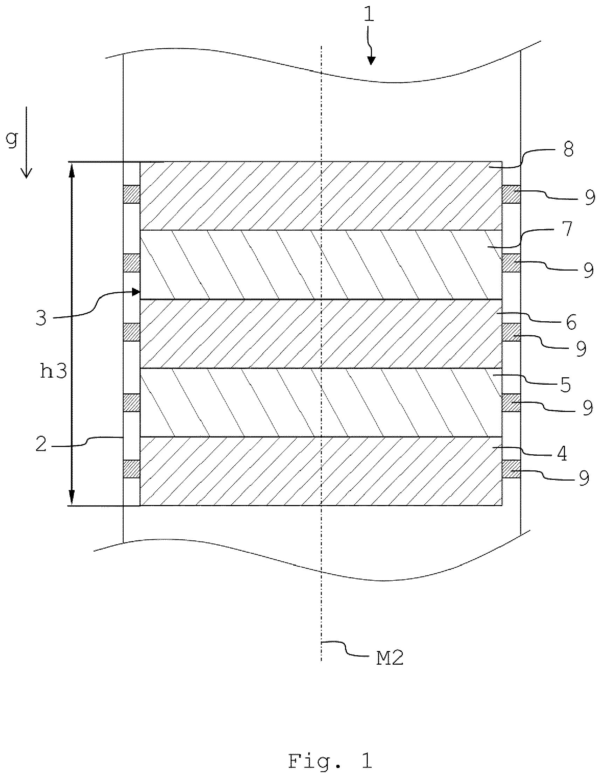

Die Fig. 1 zeigt eine stark vereinfachte schematische Schnittansicht einer Ausführungsform einer Stoffaustauschkolonne 1. Die Stoffaustauschkolonne 1 kann eine Rektifikations- oder Luftzerlegungssäule sein. Unter Rektifikation ist ein thermisches Trennverfahren zu verstehen, das eine Erweiterung der Destillation oder eine Hintereinanderschaltung vieler Destillationsschritte darstellt. Gegenüber der Destillation sind die Vorteile der Rektifikation, dass die Stoffaustauschkolonne 1 kontinuierlich betrieben werden kann und dass der Trenneffekt im Vergleich zur Destillation um ein Vielfaches höher ist, da der Dampf im Gegenstrom mit der Flüssigkeit mehrfach hintereinander in Kontakt steht. Die Stoffaustauschkolonne 1 arbeitet somit energetisch günstiger, technisch weniger aufwendig und platzsparender als eine Hintereinanderschaltung von Einfachdestillationen.

Die Stoffaustauschkolonne 1 umfasst einen Behälter 2, der eine zylinderförmige Geometrie aufweist. Der Behälter 2 kann beispielsweise aus einem Aluminiumwerkstoff oder einem Stahlwerkstoff gefertigt sein. Vorzugsweise ist der Behälter 2 aus einem Aluminiumwerkstoff gefertigt. Der Behälter 2 ist zylinderförmig um eine Symmetrie-oder Mittelachse M2 aufgebaut. Der Behälter 2 kann beispielsweise eine Höhe von 30.000 bis 50.000 Millimeter aufweisen. Der Behälter 2 kann einen kreisrunden oder annähernd kreisrunden, beispielsweise einen ovalen, Querschnitt aufweisen. Der Behälter 2 ist vorzugsweise aus einer Vielzahl Behälterabschnitte oder Mantelabschnitte aufgebaut, die stoffschlüssig miteinander verbunden sind. Die Behälterabschnitte können auch als Behältersektionen, Mantelsektionen oder Mantelschüsse bezeichnet werden. Die Mittelachse M2 ist in der Orientierung der Fig. 1 vertikal, das heißt, in einer Schwerkraftrichtung g, angeordnet.

In dem Behälter 2 ist eine Vielzahl übereinandergestapelter Packungen 3 angeordnet, von denen in der Fig. 1 jedoch lediglich eine gezeigt ist. Die Packung 3 ist eine sogenannte geordnete oder strukturierte Packung. Bei derartigen geordneten Packungen 3 werden, im Gegensatz zu ungeordneten Packungen, Metallgewebe oder Metallbleche so gefaltet und/oder gewickelt, dass es zu einer intensiven Lenkung des Dampfes und der Flüssigkeit und damit verbundenem intensiven Kontakt beider kommt. Durch eine weitere Strukturierung der Oberfläche und durch die Anbringung von Löchern werden sowohl die Benetzbarkeit der Packungsoberfläche als auch der Stoffaustausch weiter erhöht.

Die Packung 3 kann eine Vielzahl geordneter oder strukturierter Packungsscheiben 4 bis 8 aufweisen, die übereinander angeordnet sind. Die Packungsschreiben 4 bis 8 können auch als Packungslagen oder Packungsschichten bezeichnet werden. Derartige Packungsscheiben 4 bis 8 bestehen aus dünnen, gewellten und/oder gelochten Metallplatten beziehungsweise Drahtnetzen. Das Design der Packungsscheiben 4 bis 8 gewährleistet einen optimalen Austausch zwischen den unterschiedlichen Phasen (flüssig/gasförmig beziehungsweise flüssig/flüssig) bei minimalem Druckwiderstand. Die Anzahl der Packungsscheiben 4 bis 8 pro Packung ist beliebig.

Die Packungsscheiben 4 bis 8 können aus senkrecht angeordneten Packungsblechen, insbesondere aus gewellten Aluminiumblechen, gefertigt sein. Die Packungsscheiben 4 bis 8 bilden aufgrund ihrer Struktur Kondensationsoberflächen, an denen beispielsweise bei der Luftzerlegung Luftbestandteile kondensieren können. Beispielsweise können die verwendeten Packungsbleche eine Dicke von 0,1 Millimeter aufweisen. Jede Packungsscheibe 4 bis 8 kann beispielsweise eine Dicke von 200 bis 500 Millimeter aufweisen. Die Packung 3 kann so eine Höhe h3 von beispielsweise 1.000 bis 7.000 Millimeter aufweisen. Zwischen dem Behälter 2 und der Packung 3 beziehungsweise zwischen dem Behälter 2 und jeder Packungsscheibe 4 bis 8 kann noch ein umlaufender Packungskragen oder Dichtkragen 9 vorgesehen sein. Der Dichtkragen 9 ist optional und somit verzichtbar.

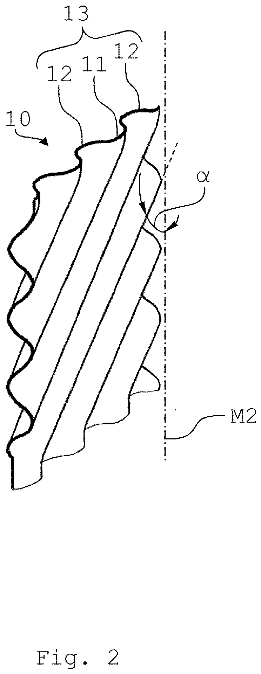

Die Fig. 2 zeigt eine schematische perspektivische Ansicht eines Teils einer Ausführungsform eines Packungsblechs 10, aus einer Vielzahl dessen die Packungsscheiben 4 bis 8 jeweils aufgebaut sind. Wie die Fig. 2 zeigt, weist das Packungsblech eine gewellte Form mit Wellenbergen 11 und Wellentälern 12 auf. Die Wellenberge 11 und die Wellentäler 12 sind so angeordnet, dass jeweils ein Wellenberg 11 zwischen zwei Wellentälern 12 und ein Wellental 12 zwischen zwei Wellenbergen 11 angeordnet ist. Die Wellenberge 11 und die Wellentäler 12 bilden Wellen 13 des Packungsblechs 10. Zusätzlich kann das Packungsblech 10 Riffelungen, Lochungen, Bohrungen und/oder Durchbrüche aufweisen. Das Packungsblech 10 ist vorzugsweise aus einem Aluminiumwerkstoff gebildet und kann, wie bereits zuvor erwähnt, eine Dicke von 0,1 Millimeter aufweisen.

Zum Herstellen einer Packungsscheibe 4 bis 8 wird eine Vielzahl derartiger Packungsbleche 10 aufeinandergestapelt. Wie der Fig. 2 weiter zu entnehmen ist, verlaufen die Wellenberge 11 und die Wellentäler 12 in einem Winkel α zu der Mittelachse M2. Der Winkel α beträgt beispielsweise 45°. Benachbarte Packungsbleche 10 können so angeordnet sein, dass sich die Wellenberge 11 und die Wellentäler 12, insbesondere in einem Winkel von 90°, kreuzen.

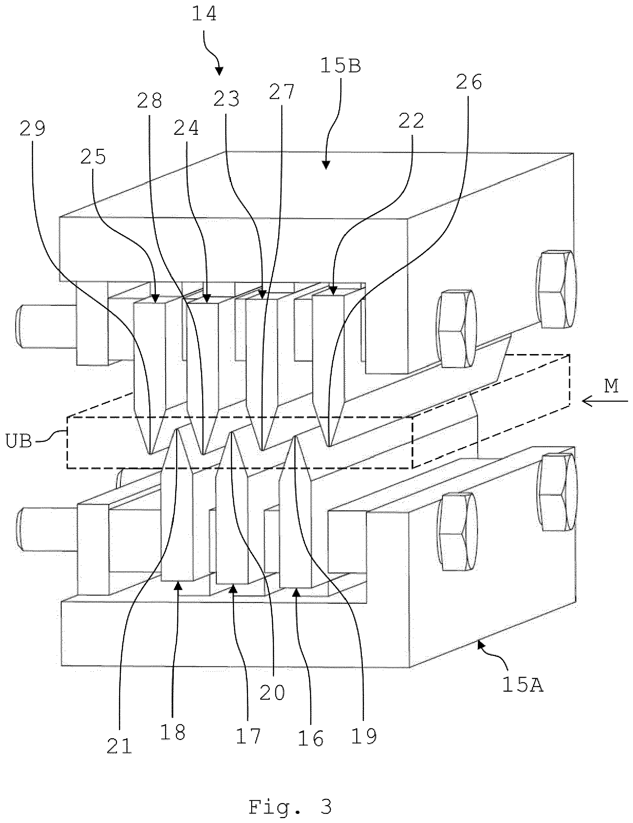

Zum Herstellen eines derartigen Packungsblechs 10 kann ein in der Fig. 3 gezeigtes Umformwerkzeug 14 verwendet werden. Das Umformwerkzeug 14 weist eine erste Werkzeughälfte 15A sowie eine zweite Werkzeughälfte 15B auf. Der ersten Werkzeughälfte 15A sind mehrere, beispielsweise drei, Biegeleisten 16 bis 18 zugeordnet, wobei jede Biegeleiste 16 bis 18 wiederum eine Biegekante 19 bis 21 umfasst. Die Anzahl der Biegeleisten 16 bis 18 ist beliebig.

Der zweiten Werkzeughälfte 15B ist ebenfalls eine Vielzahl an Biegeleisten 22 bis 25 zugeordnet. Beispielsweise sind vier Biegeleisten 22 bis 25 vorgesehen. Die Anzahl der Biegeleisten 22 bis 25 ist beliebig. Jeder Biegeleiste 22 bis 25 ist wiederum eine Biegekante 26 bis 29 zugeordnet. Die Biegeleisten 16 bis 18, 22 bis 25 sind so angeordnet, dass jeweils eine Biegeleiste 16 bis 18 der ersten Werkzeughälfte 15A zwischen zwei Biegeleisten 22 bis 25 der zweiten Werkzeughälfte 15B und umgekehrt angeordnet ist. Die Biegekanten 19 bis 21, 26 bis 29 einer Werkzeughälfte 15A, 15B ragen unterschiedlich weit in einen Umformbereich UB des Umformwerkzeugs 14 hinein.

Insbesondere ragen die Biegekanten 19 bis 21, 26 bis 29 in einer Maschinenrichtung M, in der ein unverformtes Packungsblech durch das Umformwerkzeug 14 hindurchgefördert wird, betrachtet schrittweise immer weiter in den Umformbereich UB hinein. Das heißt, die Biegekante 20 ragt weiter in den Umformbereich UB hinein als die Biegekante 19 und die Biegekante 21 ragt weiter in den Umformbereich UB hinein als die Biegekante 20. Analoges gilt für die Biegekanten 26 bis 29. Gleichzeitig verringert sich in der Maschinenrichtung M betrachtet ein jeweiliger Abstand zwischen den Biegekanten 19 bis 21. Das heißt, ein Abstand zwischen der Biegekante 21 und der Biegekante 20 ist kleiner als ein Abstand zwischen der Biegekante 20 und der Biegekante 19. Analoges gilt für die Biegekanten 26 bis 29.

Zum Herstellen des gewellten Packungsblechs 10 wird das unverformte Packungsblech, das beispielsweise als Endlosband, insbesondere als sogenanntes Coil, vorliegen kann, in der Maschinenrichtung M durch das sich öffnende und schließende Umformwerkzeug 14 hindurchgefördert, wobei mit Hilfe der unterschiedlich weit in den Umformbereich UB des Umformwerkzeugs 14 hineinragenden Biegekanten 19 bis 21, 26 bis 29 die Wellen 13 stufenweise an das unverformte Packungsblech angeformt werden. Unter einer stufenweisen oder schrittweisen Anformung ist zu verstehen, dass die Wellen 13 schrittweise vertieft werden, bis eine gewünschte Tiefe der Wellen 13 erreicht ist. Bei jedem Werkzeughub wird dabei eine Welle 13 fertiggeformt und mehrere Wellen 13 werden vorgeformt.

Zum Anformen der Wellen 13 an das Packungsblech 10 ist es vorteilhaft, wenn die erste Werkzeughälfte 15A und die zweite Werkzeughälfte 15B sowohl gegensinnig und senkrecht auf die Maschinenrichtung M zu und von dieser weg als auch parallel und gleichsinnig zu der Maschinenrichtung M bewegt werden. Das heißt, beim Schließen des Umformwerkzeugs 14 bewegen sich die Werkzeughälften 15A, 15B synchronisiert sowohl aufeinander zu und senkrecht zu der Maschinenrichtung M als auch parallel zu der Maschinenrichtung M und beim Öffnen des Umformwerkzeugs 14 bewegen sich die Werkzeughälften 15A, 15B synchronisiert sowohl voneinander weg und senkrecht zu der Maschinenrichtung M als auch parallel zueinander entlang der Maschinenrichtung M. Mit Hilfe der zu der Maschinenrichtung M parallelen Bewegungskomponente der Werkzeughälften 15A, 15B kann das Packungsblech 10 in der Maschinenrichtung M gefördert werden.

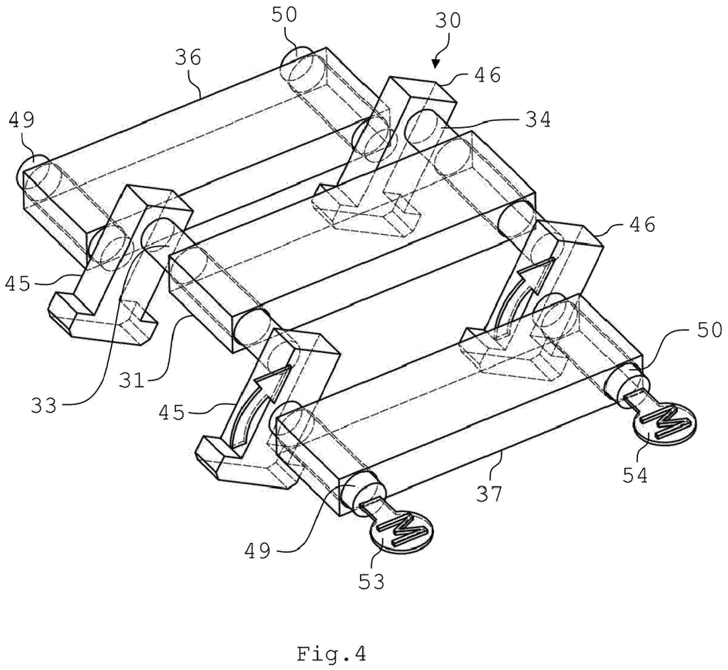

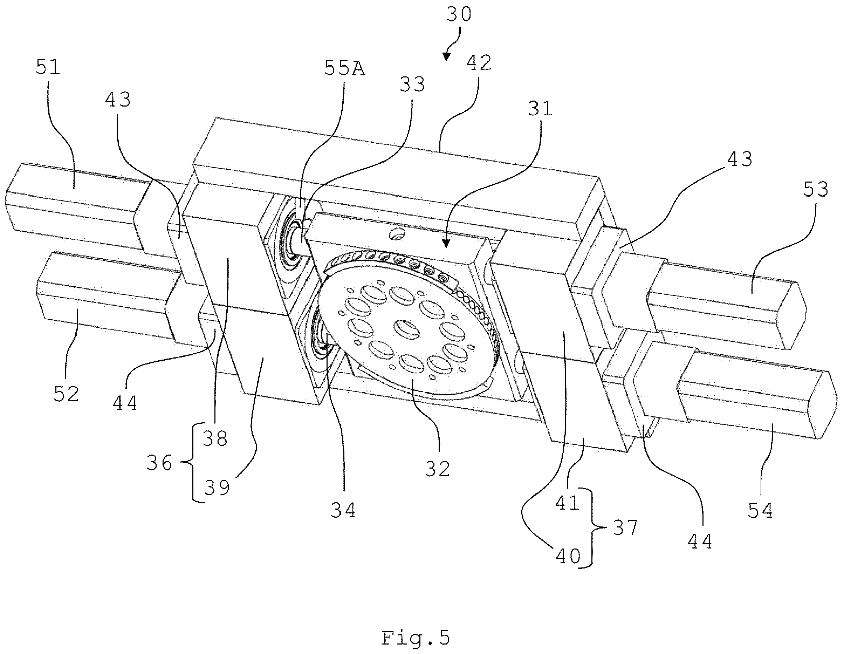

Zum Antreiben des Umformwerkzeugs 14 beziehungsweise zum Bewegen der ersten Werkzeughälfte 15A und der zweiten Werkzeughälfte 15B kann eine in den Fig. 4 bis 6, auch die nachfolgend gleichzeitig Bezug genommen wird, gezeigte Antriebsvorrichtung 30 vorgesehen sein. Insbesondere kann für jede der Werkzeughälften 15A, 15B eine derartige Antriebsvorrichtung 30 vorgesehen sein. Die Antriebsvorrichtung 30 umfasst einen Werkzeugträger 31, der dazu eingerichtet ist, eine der Werkzeughälften 15A, 15B zu tragen. Der Werkzeugträger 31 ist plattenförmig und kann einen Befestigungsabschnitt 32 aufweisen, an dem eine der Werkzeughälften 15A, 15B befestigbar, beispielsweise anschraubbar, ist. Der Werkzeugträger 31 umfasst weiterhin eine erste Exzenterachse 33 und eine parallel zu der ersten Exzenterachse 33 und beabstandet von dieser angeordnete zweite Exzenterachse 34.

Die Exzenterachsen 33, 34 sind in jeweiligen in dem Werkzeugträger 31 vorgesehenen Bohrungen 35 aufgenommen. Jeder Exzenterachse 33, 34 ist dabei eine derartige Bohrung 35 zugeordnet. Die Exzenterachsen 33, 34 sind so durch die Bohrungen 35 hindurchgeführt, dass sie beidseitig aus dem Werkzeugträger 31 herausragen. Die Exzenterachsen 33, 34 sind drehfest an oder in dem Werkzeugträger 31 gelagert. Das heißt, die Exzenterachsen 33, 34 können sich gegenüber dem Werkzeugträger 31 nicht verdrehen. Hierzu können die Exzenterachsen 33, 34 beispielsweise in die entsprechende Bohrung 35 eingepresst sein oder mit Hilfe einer formschlüssigen Verbindung, wie beispielsweise mit Hilfe einer Verzahnung oder einer Passfeder, mit diesem verbunden sein. Eine formschlüssige Verbindung entsteht durch das Ineinander- oder Hintergreifen von mindestens zwei Verbindungspartnern, in diesem Fall der jeweiligen Exzenterachse 33, 34 und dem Werkzeugträger 31. Alternativ können die Exzenterachsen 33, 34 und der Werkzeugträger 31 auch einteilig ausgebildet sein.

Die Antriebsvorrichtung 30 umfasst weiterhin einen ersten Lagerblock 36 sowie einen zweiten Lagerblock 37. Der Werkzeugträger 31 ist zwischen dem ersten Lagerblock 36 und dem zweiten Lagerblock 37 angeordnet. Der erste Lagerblock 36 kann aus zwei Lagerblockabschnitten 38, 39 ausgebildet sein. Die Lagerblockabschnitte 38, 39 können fest miteinander verbunden sein. Alternativ kann der erste Lagerblock 36 auch einteilig ausgebildet sein. Korrespondierend dazu kann der zweite Lagerblock 37 ebenfalls aus zwei Lagerblockabschnitten 40, 41 aufgebaut sein. Alternativ kann der zweite Lagerblock 37 auch einteilig ausgebildet sein.

Der erste Lagerblock 36 und der zweite Lagerblock 37 sind mit Hilfe einer Verbindungsplatte 42 fest miteinander verbunden. Beispielsweise ist die Verbindungsplatte 42 mit dem ersten Lagerblock 36 und dem zweiten Lagerblock 37 verschraubt. Der erste Lagerblock 36 und der zweite Lagerblock 37 können identisch, jedoch spiegelsymmetrisch aufgebaut sein. Jeder Lagerblock 36, 37 weist zwei abnehmbare Lagerblockdeckel 43, 44 auf. Die Lagerblockdeckel 43, 44 sind außenseitig, das heißt dem Werkzeugträger 31 abgewandt, an den Lagerblöcken 36, 37 vorgesehen.

Jedem Lagerblock 36, 37 ist ein erster Exzenterkörper 45, in oder an dem die erste Exzenterachse 33 jeweils drehbar gelagert ist, sowie ein zweiter Exzenterkörper 46 zugeordnet, in oder an dem die zweite Exzenterachse 34 jeweils drehbar gelagert ist. Das heißt, dem Werkzeugträger 31 sind vier Exzenterkörper 45, 46 zugeordnet. Die Exzenterkörper 45, 46 sind wiederum mit Hilfe einer Exzenterkörperlagerung 47 drehbar in dem jeweiligen Lagerblock 36, 37 gelagert ist. Die Exzenterkörperlagerung 47 kann Gleitlager und/oder Wälzlager umfassen. Die Exzenterachsen 33, 34 sind wiederum mit Hilfe von Exzenterachsenlagerungen 48 drehbar in oder an den Exzenterkörpern 45, 46 gelagert. Auch die Exzenterachsenlagerung 48 kann Gleitlager und/oder Wälzlager umfassen.

Die ersten Exzenterkörper 45 können erste Antriebsachsen 49 und die zweiten Exzenterkörper 46 können zweite Antriebsachsen 50 umfassen. Jede Antriebsachse 49, 50 ist mit Hilfe einer Antriebseinrichtung 51 bis 54 antreibbar. Das heißt, jedem Exzenterkörper 45, 46 kann eine Antriebseinrichtung 51 bis 54 zugeordnet sein. Die Antriebseinrichtungen 51 bis 54 können beispielsweise Elektromotoren, Hydraulikmotoren oder Pneumatikmotoren umfassen. Vorzugsweise sind die Antriebseinrichtungen 51 bis 54 synchronisiert. Alternativ kann auch nur eine oder zwei Antriebseinrichtungen 51 bis 54 vorgesehen sein, wobei dann die synchronisierte Bewegung der Antriebsachsen 49, 50 beispielsweise über ein Getriebe oder einen Riemenantrieb erfolgt. Jedem Exzenterkörper 45, 46 können zwei Gegengewichte 55A, 55B zugeordnet sein, die zum Ausgleichen einer Unwucht geeignet sind. Die Gegengewichte 55A, 55B können fest mit dem jeweiligen Exzenterkörper 45, 46 verbunden sein.

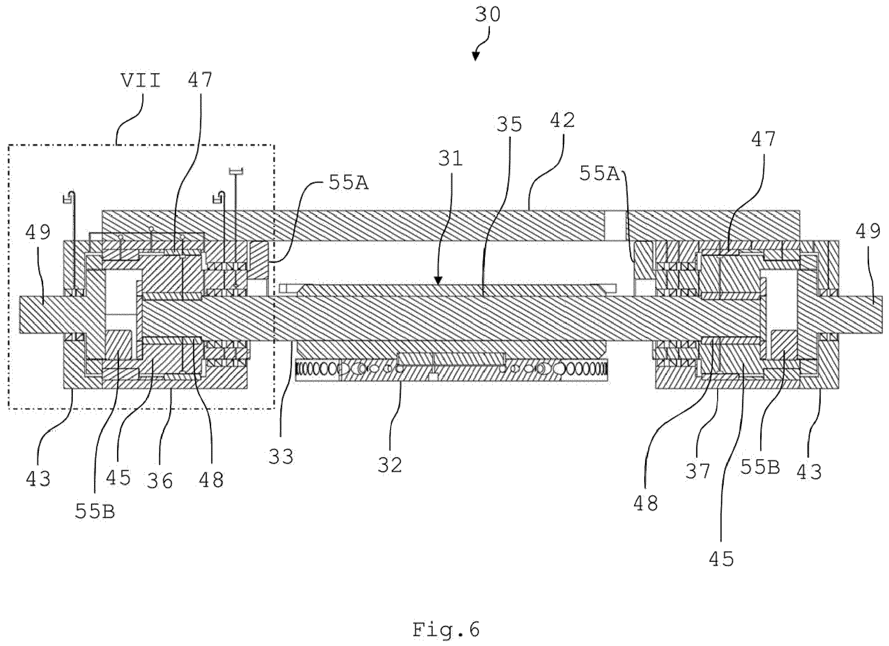

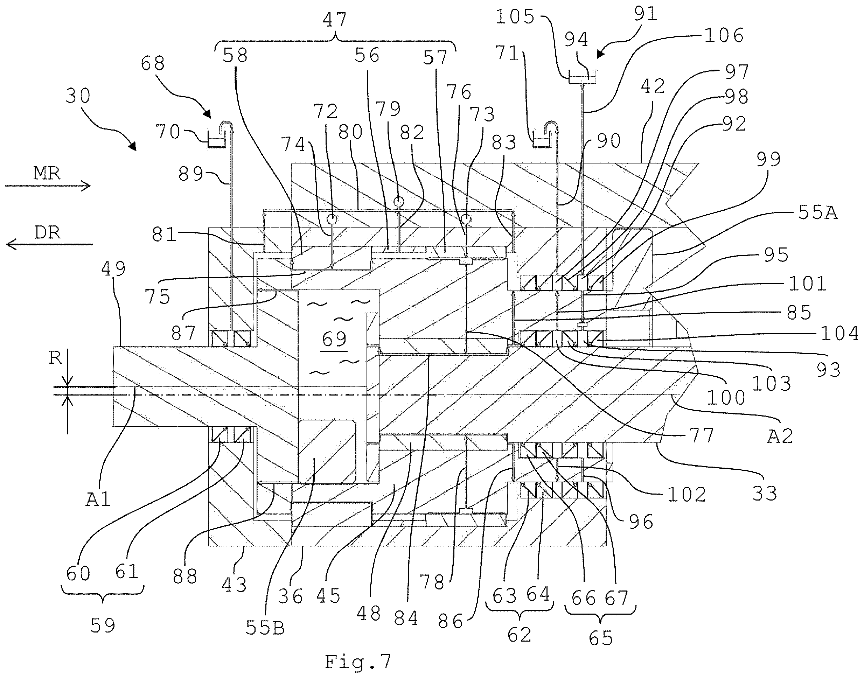

Wie die Fig. 7 in einer Detailansicht der Fig. 6 zeigt, kann die Exzenterkörperlagerung 47 einen Zwischenring 56 und zwei Gleitlager 57, 58 umfassen, zwischen denen der Zwischenring 56 angeordnet ist. Mit Hilfe des Zwischenrings 56 werden die Gleitlager 57, 58 unter Mitwirkung des Lagerblockdeckels 43 in dem Lagerblock 36 fixiert. Die Exzenterkörperlagerung 47 kann aber auch Wälzlager umfassen. Die Exzenterachsenlagerung 48 ist vorzugsweise als Gleitlager ausgebildet. Die Exzenterachsenlagerung 48 kann aber auch ein Wälzlager umfassen.

Jeder Exzenterkörper 45, 46 umfasst eine Rotationsachse A1, um die sich der Exzenterkörper 45, 46 beziehungsweise dessen Antriebsachse 49, 50 im Betrieb der Antriebsvorrichtung 30 dreht. Die Exzenterachsen 33, 34 weisen ebenfalls eine Rotationsachse A2 auf, um die sich im Betrieb der Antriebsvorrichtung 30 die jeweilige Exzenterachse 33, 34 jedoch nicht dreht, sondern um die sich der entsprechende Exzenterkörper 45, 46 mit Hilfe der Exzenterachsenlagerung 48 dreht. Die Rotationsachse A1 und die Rotationsachse A2 sind parallel zueinander, jedoch beabstandet voneinander angeordnet. Insbesondere ist die Rotationsachse A1 um einen Exzenterradius R von der Rotationsachse A2 beabstandet angeordnet. Im Betrieb der Antriebsvorrichtung 30 bewegt sich die Rotationsachse A2 der jeweiligen Exzenterachse 33, 34 kreisförmig um die Rotationsachse A1 des jeweiligen Exzenterkörpers 45, 46.

Zwischen dem jeweiligen Lagerblockdeckel 43, 44 und der entsprechenden Antriebsachse 49, 50 ist jeweils eine Dichteinrichtung 59 vorgesehen. Die Dichteinrichtung 59 kann einen oder mehrere, beispielsweise zwei, Wellendichtringe 60, 61 umfassen. Zwischen den Exzenterkörpern 45, 46, die in den Lagerblöcken 36, 37 aufgenommen sind, und dem jeweiligen Lagerblock 36, 37 ist jeweils eine Dichteinrichtung 62 vorgesehen. Die Dichteinrichtung 62 kann beispielsweise zwei Wellendichtringe 63, 64 umfassen. Weiterhin ist auch zwischen den Exzenterachsen 33, 34 und dem entsprechenden Exzenterkörper 45, 46 eine Dichteinrichtung 65 vorgesehen, die ebenfalls zwei Wellendichtringe 66, 67 umfassen kann.

Die Exzenterkörperlagerung 47 sowie die Exzenterachsenlagerung 48 ist zwischen der Dichteinrichtung 59 sowie den Dichteinrichtungen 62, 65 angeordnet. Dabei ist zwischen der Exzenterkörperlagerung 47 und der Exzenterachsenlagerung 48 keine Dichteinrichtung vorgesehen, so dass die Exzenterkörperlagerung 47 und die Exzenterachsenlagerung 48 einen gemeinsamen Schmierkreislauf aufweisen können.

Die Antriebsvorrichtung 30 umfasst weiterhin eine Schmiereinrichtung 68 zum Schmieren der Exzenterkörperlagerung 47 und der Exzenterachsenlagerung 48 mit einem Schmiermedium 69, welches in einem Raum zwischen der Dichteinrichtung 59 sowie den Dichteinrichtungen 62, 65 zirkulieren kann. Die Schmiereinrichtung 68 kann mehrere Sammelbehälter 70, 71 zum Sammeln von Leckage-Schmiermedium umfassen. Die Schmiereinrichtung 68 kann weiterhin eine Pumpe umfassen, um das Schmiermedium 69 mit Druck zu beaufschlagen. Das Schmiermedium 69 kann Öl sein.

Die Schmiereinrichtung 68 umfasst beispielsweise einen oder mehrere Zuläufe 72, 73, über die der Exzenterkörperlagerung 47 und der Exzenterachsenlagerung 48 das Schmiermedium 69 druckbeaufschlagt zugeführt wird. Das Schmiermedium 69 wird dann über einen in dem jeweiligen Exzenterkörper 45, 46 und dem entsprechenden Lagerblock 36, 37 vorgesehenen Kanal 74, einen Lagerschmierfilm 75 sowie Kanäle 76 bis 78 der Exzenterkörperlagerung 47 sowie der Exzenterachsenlagerung 48 zugeführt. Die Fließrichtung des Schmiermediums 69 ist dabei in der Fig. 7 mit Hilfe von Pfeilen verdeutlicht.

Die Schmiereinrichtung 68 umfasst weiterhin einen Rücklauf 79, über den das Schmiermedium 69 beispielsweise in einen Vorratsbehälter zurücklaufen kann, um dort aufbereitet zu werden und wieder den Zuläufen 72, 73 zugeführt zu werden. Das Schmiermedium 69 kann dem Rücklauf 79 mit Hilfe von Kanälen 80 bis 83, einem Lagerschmierfilm 84 sowie Kanälen 85 bis 88 zugeführt werden. Das Schmiermedium 69, das aufgrund von Leckagen in den Dichteinrichtungen 59, 62, 65 nicht dem Rücklauf 79 zugeführt werden kann, kann über Leitungen 89, 90 den Sammelbehältern 70, 71 zugeführt werden. Von dort kann das Schmiermedium 69 wiederum aufbereitet werden und/oder einem Vorratsbehälter zugeführt werden. Die Sammelbehälter 70, 71 können beispielsweise über einen Sensor oder ein Schauglas überwacht werden.

Die Antriebsvorrichtung 30 umfasst weiterhin eine Sperrmediumeinrichtung 91, die dazu eingerichtet ist, eine zwischen der Exzenterkörperlagerung 47 und dem Werkzeugträger 31 vorgesehene erste Sperrmediumkammer 92 sowie zusätzlich eine zwischen der Exzenterachsenlagerung 48 und dem Werkzeugträger 31 vorgesehene zweite Sperrmediumkammer 93 mit einem Sperrmedium 94, insbesondere mit Wasser, zu beaufschlagen, um einen Austritt des Schmiermediums 69 in Richtung des Werkzeugträgers 31 zu unterbinden. Die erste Sperrmediumkammer 92 läuft ringförmig um den jeweiligen Exzenterkörper 45, 46 um und die zweite Sperrmediumkammer 93 läuft ringförmig um die jeweilige Exzenterachse 33, 34 um. Die erste Sperrmediumkammer 92 ist mit Hilfe von Kanälen 95, 96 mit der zweiten Sperrmediumkammer 93 in Fluidverbindung.

Zwischen der Exzenterkörperlagerung 47 und der ersten Sperrmediumkammer 92 ist eine erste Leckagemediumkammer 97 zum Sammeln von durch die Dichteinrichtung 62 durchgedrehtem Schmiermedium 69 und des Sperrmediums 94 vorgesehen. Die erste Leckagemediumkammer 97 läuft ringförmig um den jeweiligen Exzenterkörper 45, 46 um. Zwischen der ersten Sperrmediumkammer 92 und der ersten Leckagemediumkammer 97 ist eine erste Dichteinrichtung 98, insbesondere ein Wellendichtring, angeordnet, die die erste Sperrmediumkammer 92 gegenüber der ersten Leckagemediumkammer 97 abdichtet. Die erste Sperrmediumkammer 92 ist nach außen, das heißt in Richtung des Werkzeugträgers 31 mit Hilfe einer Dichteinrichtung 99, insbesondere einem Wellendichtring, abgedichtet.

Zwischen der Exzenterachsenlagerung 48 und der zweiten Sperrmediumkammer 93 ist eine zweite Leckagemediumkammer 100 zum Sammeln des durch die Dichteinrichtung 65 durchgetretenem Schmiermedium 69 und des Sperrmediums 94 angeordnet. Die zweite Leckagemediumkammer 100 läuft ringförmig um die jeweilige Exzenterachse 33, 34 um. Die Leckagemediumkammern 97, 100 sind mit Hilfe von Kanälen 101, 102 in Fluidverbindung. Zwischen der zweiten Leckagemediumkammer 100 und der zweiten Sperrmediumkammer 93 ist eine zweite Dichteinrichtung 103, insbesondere ein Wellendichtring, vorgesehen. Nach außen, das heißt in Richtung des Werkzeugträgers 31, ist die zweite Sperrmediumkammer 93 mit Hilfe einer Dichteinrichtung 104, insbesondere einem Wellendichtring, abgedichtet.

Die Sperrmediumeinrichtung 91 umfasst ferner einen Druckbehälter 105, in dem das Sperrmedium 94 gespeichert ist. Über eine Leitung 106 kann von dem Druckbehälter 105 das Sperrmedium 94 der ersten Sperrmediumkammer 92 und von dort über die Kanäle 95, 96 der zweiten Sperrmediumkammer 93 zugeführt werden. Die Sperrmediumeinrichtung 91 ist dazu eingerichtet, das Sperrmedium 94 in der ersten Sperrmediumkammer 92 und in der zweiten Sperrmediumkammer 93 jeweils mit einem Druck zu beaufschlagen, der höher ist als ein entsprechender Druck des Schmiermediums 69 und des Sperrmediums 94 in der ersten Leckagemediumkammer 97 und der zweiten Leckagemediumkammer 100. Diese Druckbeaufschlagung kann beispielsweise mit Hilfe einer Pumpe erfolgen, oder der geodätische Druck des Sperrmediums 94 kann ausgenutzt werden. Auch an der Dichteinrichtung 59 kann eine derartige Sperrmediumkammer 92, 93 und eine Leckagemediumkammer 97, 100 vorgesehen sein.

Die Funktionalität der Antriebsvorrichtung 30 wird nachfolgend erläutert. Im Betrieb der Antriebsvorrichtung 30 drehen sich die Exzenterkörper 45, 46 in dem entsprechenden Lagerblock 36, 37, in denen diese drehbar mit Hilfe der Exzenterkörperlagerung 47 gelagert sind. Die Exzenterkörper 45, 46 drehen sich wiederum um die feststehenden Exzenterachsen 33, 34, die mit der Exzenterachsenlagerung 48 in dem jeweiligen Exzenterkörper 45, 46 drehbar gelagert sind. Mit Hilfe der Schmiereinrichtung 68 wird der Exzenterkörperlagerung 47 und der Exzenterachsenlagerung 48 das Schmiermedium 69 druckbeaufschlagt zugeführt. Die Exzenterkörperlagerung 47 und die Exzenterachsenlagerung 48 werden hierdurch mit einem Schmierfilm beaufschlagt.

Da die Dichteinrichtungen 62, 65 aufgrund der Druckbeaufschlagung des Schmiermediums 69 nicht vollständig dicht sind oder beschädigt sein können, tritt das Schmiermedium 69 in geringer Menge in die erste Leckagemediumkammer 97 sowie in die zweite Leckagemediumkammer 100 ein. Da jedoch der Druck des Sperrmediums 94 in der ersten Sperrmediumkammer 92 und in der zweiten Sperrmediumkammer 93 größer ist als in der ersten Leckagemediumkammer 97 sowie in der zweiten Leckagemediumkammer 100, tritt das Schmiermedium 69 nicht von der ersten Leckagemediumkammer 97 sowie der zweiten Leckagemediumkammer 100 durch die erste Dichteinrichtung 98 sowie die zweite Dichteinrichtung 103 in die erste Sperrmediumkammer 92 und die zweite Sperrmediumkammer 93 ein, sondern das Sperrmedium 94 tritt im Fall einer Leckage bei Beschädigung oder durch allgemeine Undichtigkeiten durch die erste Dichteinrichtung 98 sowie die zweite Dichteinrichtung 103 in die erste Leckagemediumkammer 97 sowie zweite Leckagemediumkammer 100 ein.

Das Gemisch aus dem Schmiermedium 69 und dem Sperrmedium 94 kann von der zweiten Leckagemediumkammer 100 durch die Kanäle 101, 102 der ersten Leckagemediumkammer 97 zugeführt werden und von dort über die Leitung 90 dem Sammelbehälter 71 zugeleitet werden. Der Sammelbehälter 71 kann der Sperrmediumeinrichtung 91 zugeordnet sein. In dem Sammelbehälter 71 kann das Sperrmedium 94 von dem Schmiermedium 69 getrennt werden. Im normalen Betriebszustand sammelt sich jedoch in dem Sammelbehälter 71 keine Flüssigkeit. Falls sich in dem Sammelbehälter 71 dennoch Flüssigkeit sammelt, weist dies in der Regel auf eine Beschädigung zumindest einer der Dichteinrichtungen 62, 65, 98, 103 hin. Ein Sensor in oder an dem Sammelbehälter 71, der Flüssigkeit erkennt, kann beispielsweise das Bedienpersonal alarmieren und einen notwendigen Dichtungswechsel anzeigen.

Mit Hilfe der Sperrmediumeinrichtung 91 kann somit verhindert werden, dass im Betrieb der Antriebsvorrichtung 30, beispielsweise beim Herstellen eines Packungsblechs 10, das Schmiermedium 69 zwischen die Werkzeughälften 15A, 15B des Umformwerkzeugs 14 und damit auf das fertige Packungsblech 10 gelangt. Hierdurch kann auf eine aufwendige Reinigung des Packungsblechs 10 nach dessen Herstellung verzichtet werden. Insbesondere bei der Verwendung derartiger Packungsbleche 10 in einer Stoffaustauschkolonne 1 zur Sauerstoffherstellung ist eine Verunreinigung der Packungsbleche 10 mit dem Schmiermedium 69 nicht zulässig.

Bei abgenommenen Lagerblockdeckeln 43, 44 kann der jeweilige Exzenterkörper 45, 46, die Exzenterkörperlagerung 47 und/oder die Exzenterachsenlagerung 48 in einer Demontagerichtung DR, die von dem Werkzeugträger 31 weg orientiert ist, aus dem entsprechenden Lagerblock 36, 37 entnommen werden. Auch hierdurch kann eine Verunreinigung des Umformwerkzeugs 14 verhindert werden. Umgekehrt können der jeweilige Exzenterkörper 45, 46, die Exzenterkörperlagerung 47 und/oder die Exzenterachsenlagerung 48 in einer Montagerichtung MR, die zu dem Werkzeugträger 31 hin orientiert ist, in den entsprechenden Lagerblock 36, 37 eingelegt werden. Hierdurch ist stets gewährleistet, dass eine Verunreinigung des Umformwerkzeugs 14 verhindert wird. Insbesondere ist eine schnelle Wartung der Dichteinrichtungen 59, 62, 65, 98, 99, 103, 104 sowie der Exzenterkörperlagerung 47 und der Exzenterachsenlagerung 48 von der Außenseite der Antriebsvorrichtung 30 ohne großen Demontageaufwand an der Gesamtmaschine möglich.

Obwohl die vorliegende Erfindung anhand von Ausführungsbeispielen vollständig beschrieben wurde, ist sie vielfältig modifizierbar.

### Bezugszeichen

- 1: Stoffaustauschkolonne
- 2: Behälter
- 3: Packung
- 4: Packungsscheibe
- 5: Packungsscheibe
- 6: Packungsscheibe
- 7: Packungsscheibe
- 8: Packungsscheibe
- 9: Dichtkragen
- 10: Packungsblech
- 11: Wellenberg
- 12: Wellental
- 13: Welle
- 14: Umformwerkzeug
- 15A: Werkzeughälfte
- 15B: Werkzeughälfte
- 16: Biegeleiste
- 17: Biegeleiste
- 18: Biegeleiste
- 19: Biegekante
- 20: Biegekante
- 21: Biegekante
- 22: Biegeleiste
- 23: Biegeleiste
- 24: Biegeleiste
- 25: Biegeleiste
- 26: Biegekante
- 27: Biegekante
- 28: Biegekante
- 29: Biegekante
- 30: Antriebsvorrichtung
- 31: Werkzeugträger
- 32: Befestigungsabschnitt
- 33: Exzenterachse
- 34: Exzenterachse
- 35: Bohrung
- 36: Lagerblock
- 37: Lagerblock
- 38: Lagerblockabschnitt
- 39: Lagerblockabschnitt
- 40: Lagerblockabschnitt
- 41: Lagerblockabschnitt
- 42: Verbindungsplatte
- 43: Lagerblockdeckel
- 44: Lagerblockdeckel
- 45: Exzenterkörper
- 46: Exzenterkörper
- 47: Exzenterkörperlagerung
- 48: Exzenterachsenlagerung
- 49: Antriebsachse
- 50: Antriebsachse
- 51: Antriebseinrichtung
- 52: Antriebseinrichtung
- 53: Antriebseinrichtung
- 54: Antriebseinrichtung
- 55A: Gegengewicht
- 55B: Gegengewicht
- 56: Zwischenring
- 57: Gleitlager
- 58: Gleitlager
- 59: Dichteinrichtung
- 60: Wellendichtring
- 61: Wellendichtring
- 62: Dichteinrichtung
- 63: Wellendichtring
- 64: Wellendichtring
- 65: Dichteinrichtung
- 66: Wellendichtring
- 67: Wellendichtring
- 68: Schmiereinrichtung
- 69: Schmiermedium
- 70: Sammelbehälter
- 71: Sammelbehälter
- 72: Zulauf
- 73: Zulauf
- 74: Kanal
- 75: Lagerschmierfilm
- 76: Kanal
- 77: Kanal
- 78: Kanal
- 79: Rücklauf
- 80: Kanal
- 81: Kanal
- 82: Kanal
- 83: Kanal
- 84: Lagerschmierfilm
- 85: Kanal
- 86: Kanal
- 87: Kanal
- 88: Kanal
- 89: Leitung
- 90: Leitung
- 91: Sperrmediumeinrichtung
- 92: Sperrmediumkammer
- 93: Sperrmediumkammer
- 94: Sperrmedium
- 95: Kanal
- 96: Kanal
- 97: Leckagemediumkammer
- 98: Dichteinrichtung
- 99: Dichteinrichtung
- 100: Leckagemediumkammer
- 101: Kanal
- 102: Kanal
- 103: Dichteinrichtung
- 104: Dichteinrichtung
- 105: Druckbehälter
- 106: Leitung

- A1: Rotationsachse
- A2: Rotationsachse
- DR: Demontagerichtung
- g: Schwerkraftrichtung
- h3: Höhe
- M: Maschinenrichtung
- MR: Montagerichtung
- M2: Mittelachse
- R: Exzenterradius
- UB: Umformbereich
- α: Winkel

## Patentansprüche

1. Antriebsvorrichtung (30) für ein Umformwerkzeug (14), mit einem Werkzeugträger (31), einem Lagerblock (36, 37), einem Exzenterkörper (45, 46), der mit Hilfe einer Exzenterkörperlagerung (47) in dem Lagerblock (36, 37) drehbar gelagert ist, einer Exzenterachse (33, 34), die drehfest an oder in dem Werkzeugträger (31) gelagert ist und die mit Hilfe einer Exzenterachsenlagerung (48) drehbar in dem Exzenterkörper (45, 46) gelagert ist, wobei eine Rotationsachse (A1) des Exzenterkörpers (45, 46) und eine Rotationsachse (A2) der Exzenterachse (33, 34) parallel zueinander und beabstandet voneinander positioniert sind.

2. Antriebsvorrichtung nach Anspruch 1, ferner umfassend eine Schmiereinrichtung (68) zum Schmieren der Exzenterkörperlagerung (47) und der Exzenterachsenlagerung (48) mit einem Schmiermedium (69), und eine Sperrmediumeinrichtung (91), die dazu eingerichtet ist, eine zwischen der Exzenterkörperlagerung (47) und dem Werkzeugträger (31) vorgesehene erste Sperrmediumkammer (92) und eine zwischen der Exzenterachsenlagerung (48) und dem Werkzeugträger (31) vorgesehene zweite Sperrmediumkammer (93) mit einem Sperrmedium (94) zu beaufschlagen, um einen Austritt des Schmiermediums (69) in Richtung des Werkzeugträgers (31) zu unterbinden.

3. Antriebsvorrichtung nach Anspruch 2, wobei zwischen der Exzenterkörperlagerung (47) und der ersten Sperrmediumkammer (92) eine erste Leckagemediumkammer (97) zum Sammeln des Schmiermediums (69) und des Sperrmediums (94) angeordnet ist, und wobei zwischen der Exzenterachsenlagerung (48) und der zweiten Sperrmediumkammer (93) eine zweite Leckagemediumkammer (100) zum Sammeln des Schmiermediums (69) und des Sperrmediums (94) angeordnet ist.

4. Antriebsvorrichtung nach Anspruch 3, wobei die Sperrmediumeinrichtung (91) dazu eingerichtet ist, das Sperrmedium (94) in der ersten Sperrmediumkammer (92) und das Sperrmedium (94) in der zweiten Sperrmediumkammer (93) jeweils mit einem Druck zu beaufschlagen, der höher ist als ein entsprechender Druck des Schmiermediums (69) und des Sperrmediums (94) in der ersten Leckagemediumkammer (97) und der zweiten Leckagemediumkammer (100).

5. Antriebsvorrichtung nach Anspruch 3 oder 4, wobei zwischen der ersten Sperrmediumkammer (92) und der ersten Leckagemediumkammer (97) eine erste Dichteinrichtung (98), insbesondere ein Wellendichtring, angeordnet ist, und wobei zwischen der zweiten Sperrmediumkammer (93) und der zweiten Leckagemediumkammer (100) eine zweite Dichteinrichtung (103), insbesondere ein Wellendichtring, angeordnet ist.

6. Antriebsvorrichtung nach einem der Ansprüche 3 - 5, wobei zwischen der Exzenterkörperlagerung (47) und der ersten Leckagemediumkammer (97) eine Dichteinrichtung (62), insbesondere ein Wellendichtring, angeordnet ist.

7. Antriebsvorrichtung nach einem der Ansprüche 3 - 6, wobei zwischen der Exzenterachsenlagerung (48) und der zweiten Leckagemediumkammer (100) eine Dichteinrichtung (65), insbesondere ein Wellendichtring, angeordnet ist.

8. Antriebsvorrichtung nach einem der Ansprüche 1 - 7, ferner umfassend einen ersten Lagerblock (36) und einen zweiten Lagerblock (37), wobei der Werkzeugträger (31) zwischen dem ersten Lagerblock (36) und dem zweiten Lagerblock (37) angeordnet ist, und wobei jedem Lagerblock (36, 37) ein erster Exzenterkörper (45) und ein zweiter Exzenterkörper (46) zugeordnet sind, die jeweils mit Hilfe einer Exzenterkörperlagerung (47) in dem entsprechenden Lagerblock (36, 37) drehbar gelagert sind.

9. Antriebsvorrichtung nach Anspruch 8, ferner umfassend eine erste Exzenterachse (33), die drehfest an oder in dem Werkzeugträger (31) gelagert ist und die mit Hilfe einer Exzenterachsenlagerung (48) drehbar in dem ersten Exzenterkörper (45) gelagert ist, und eine zweite Exzenterachse (34), die drehfest an oder in dem Werkzeugträger (31) gelagert ist und die mit Hilfe einer Exzenterachsenlagerung (48) drehbar in dem zweiten Exzenterkörper (46) gelagert ist.

10. Antriebsvorrichtung nach Anspruch 8 oder 9, wobei der erste Lagerblock (36) und der zweite Lagerblock (37) mit Hilfe einer Verbindungsplatte (42) miteinander verbunden sind.

11. Antriebsvorrichtung nach einem der Ansprüche 1 - 10, wobei sich die Rotationsachse (A2) der Exzenterachse (33, 34) im Betrieb der Antriebsvorrichtung (30) kreisförmig mit einem Exzenterradius (R) um die Rotationsachse (A1) des Exzenterkörpers (45, 46) bewegt.

12. Antriebsvorrichtung nach einem der Ansprüche 1 - 11, wobei der Exzenterkörper (45, 46) mit Hilfe einer Antriebseinrichtung (51 - 54) antreibbar ist.

13. Antriebsvorrichtung nach einem der Ansprüche 1 - 12, wobei der Lagerblock (36, 37) einen abnehmbaren Lagerblockdeckel (43, 44) aufweist, der dem Werkzeugträger (31) abgewandt an dem Lagerblock (36, 37) befestigt ist.

14. Antriebsvorrichtung nach Anspruch 13, wobei bei abgenommenen Lagerblockdeckel (43, 44) der Exzenterkörper (45, 46), die Exzenterkörperlagerung (47) und/oder die Exzenterachsenlagerung (48) in einer Demontagerichtung (DR), die von dem Werkzeugträger (31) weg orientiert ist, aus dem Lagerblock (36, 37) entnehmbar sind.

15. Antriebsvorrichtung nach einem der Ansprüche 1 - 14, wobei die Exzenterkörperlagerung (47) und/oder die Exzenterachsenlagerung (48) Gleitlager (57, 58) aufweist.
